# EUROPEAN PATENT SPECIFICATION

(11) **EP 0 798 026 B1**
(45) Date of publication and mention of the grant of the patent: **12.06.2002**
(21) Application number: 97200823.9
(22) Date of filing: 18.03.1997
(51) Int. Cl.: B01D 24/30, B01D 24/46, B01D 37/03, B01J 8/22

(54) **Reaction vessel**
Reaktionsgefäss
Enceinte de réaction

(30) Priority: 20.03.1996 NL 1002662
(43) Date of publication of application: 01.10.1997
(73) Proprietor: Astraco Beheer B.V., 2172 HV Sassenheim (NL)
(72) Inventor: Assen, Harry, 2172 JB Sassenheim (NL)
(74) Representative: Hoorweg, Petrus Nicolaas

(56) References cited:
- EP-A- 0 306 431
- EP-A- 0 560 215
- US-A- 4 322 296
- PATENT ABSTRACTS OF JAPAN vol. 009, no. 119 (C-282), 23 May 1985 & JP 60 007992 A (KURITA KOGYO KK), 16 January 1985,

## Description

The invention relates to a method for treating a contaminated liquid in a reaction vessel provided with at least two reaction spaces situated one above the other, wherein said liquid to be treated is carried through the reaction vessel in upward flow from the bottom to the top, as well as through a filter bed of granular material arranged in at least the highest located space, wherein one or more reagents is added to said upward liquid flow at least in a reaction space under the filter bed of granular material, wherein the filter material is moved continuously downward through at least one reaction space counter to the liquid flow whereupon the filter material is fed back to the top of the vessel and subjected to a washing treatment.

Such methods or apparatus are generally known for treating waste water, as disclosed in EP-A-306 431, wherein for instance, using chemical reactions, gaseous reaction products or flocculent reaction products can result. These are generally difficult to separate and the invention has for its object to perform such a process in a more simple manner.

The method according to the invention is distinguished in that a gaseous reaction product formed in a space is captured by capturing means in this same space.

Due to the use of a filter material in a higher located reaction space it is possible to finally filter out the flocculent reaction products or other contamination products, whereby the liquid for treating is finally cleaned. The gaseous reaction products can already be captured at the bottom of the filter prior to the filter action due to the supply of the reagent, so that the gas does not have an adverse effect on the filtration process.

It is herein also possible to partly feed back into one of the reaction spaces a part of the biomass which is formed in the filter bed and washed away.

As the filter material consists of granules the invention further proposes to provide the apparatus with a vertically standing hollow guide of an air pump for transporting the filter material, which guide is connected to the lower reaction space, i.e. where the contaminated filter material is situated, which guide leads to a washing device for cleaning the filter material.

This guide is preferably embodied as a tube which extends through the reaction space and on the upper end of which the washing device is arranged. Owing to the central placing a very uniform cleaning of the filter material can take place as seen over a horizontal cross section of the reaction space.

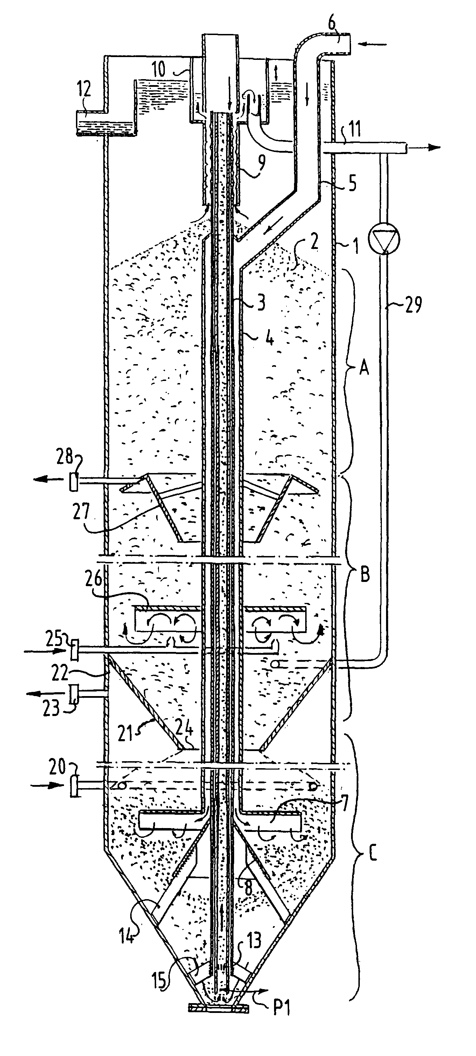

Above mentioned and other characteristics of the invention will be further elucidated in the figure description of an embodiment hereinbelow. The figure shows a standing cross section of an apparatus according to the invention provided with three reaction spaces.

Designated in the figure with the numeral 1 is the reaction vessel in which the reaction spaces are indicated with A, B and C. Arranged in the vessel is a filter bed 2 which extends in this embodiment over the three reaction spaces. The vessel consists of a cylindrical portion and a conical portion connecting thereunder, wherein the top end of the vessel is open. Arranged in the middle of vessel 1 is a double-walled tube 3, the inner tube of which protrudes into the tip of the conical portion of vessel 1, while the outer tube ends at a distance thereabove. At the top the tubes are mutually connected to form a closed space between the inner and outer tube. Halfway along the height of vessel 1 a tubular jacket 4 is arranged co-axially around the double-walled tube 3, the top end of which jacket is connected to a feed tube 5 for the liquid for cleaning which is supplied at 6. Connected to the underside of jacket 4 in star shape are a number of channels 7 which in cross section form an upside down U, so that the underside thereof is open. A feed construction other than channels 7 is likewise possible.

A conical screen 8 is further placed round double-walled tube 3 on the underside of jacket 4.

Jacket 4 can of course connect onto a perforated or non-perforated conical screen at a distance above screen 8 for uniform distribution of the liquid for treating supplied through jacket 4.

Above jacket 4 a second jacket 9 is fitted round double-walled tube 3, the bottom end of which is open and the top end of which debouches into a tank 10 situated in the top of vessel 1. In the bottom of the tank a tube 11 protrudes upward into tank 10 and runs downward through the wall of vessel 1 to the outside.

An outlet 12 is further arranged in the upper part of vessel 1 for the cleaned water.

At the bottom end of tube 3 strips 14 are placed in the line of the conical screen 8, the ends of which strips support on the inner wall of the conical bottom end of vessel 1. If necessary, a second pair of strips 15 is arranged which are fixed to the bottom end of outer tube 3 and likewise support on the conical bottom end.

The granular filter bed of for instance sand extends to above the jacket 4 and beneath the jacket 9.

The liquid for cleaning, for example waste water, is fed into the tube 5 at 6, whereafter it sinks downward to the star-shaped channels 7 where it disperses over the horizontal cross section of the zone C of vessel 1 and filter bed 2. The water is then filtered in upward flow by the granular filling and is carried away out of vessel 1 at the top via outlet 12. By supplying a quantity of air into the space between both tubes of double-walled tube 3, this air will flow upward into the inner tube at the bottom via slits 13, carrying with it the liquid with the granulated material from filter bed 2. This material is there washed in the upward movement and will flow out above double-walled tube 3 into the bottom side of the tank 10 and sink downward for a second washing between tube 9 and double-walled tube 3. Cleaned water which flows upward to tank 10 is used for this second washing, wherein the contamination is carried away with the used water via outlet 11. The sand flows back onto the top of sand bed 2.

It will be apparent from the above description of the operation that the sand bed makes a continuous downward movement because it is carried away at the bottom by the transport pump formed by double-walled tube 3 and supplied at the top from the jacket 9. The filter material can thus be re-used continuously because it is continuously being cleaned.

A counterflow movement thus takes place of on the one hand an upward flow of the liquid for cleaning and a downward flow of the filter material. This latter runs over the whole vertical height of reaction vessel 1 but it will be apparent that within the scope of the invention the air pump slits 13 can also be arranged at a higher level, or one or more pumps, so that the filter granules are carried upward earlier from a section A, B or C.

According to the invention each section can be intended for performing a determined treatment on the liquid for cleaning. This reaction may be physical, chemical or biological, wherein the filter material can have an adapted property, such as an absorbent or bio-mass-carrying property. Such a reaction takes place subject to the addition of a reagent, which can be supplied for instance via the connecting stub 20 in the lowest zone C. Possible gas formation can be captured under a conical inward-pointing screen 21 which fits closely at 22 onto the wall of vessel 1. A gas discharge 23 serves to capture the gaseous reaction product. The partially treated liquid can then pass via the opening 24 into a higher located reaction space B, where a reagent can again be admitted into this space via connecting stub 25. This can for instance be a gaseous reagent which is additionally dispersed by a distribution plate 26, wherein possible gaseous reaction products can again be discharged via a hat-shaped screen 27 provided with a gas discharge 28.

Finally, filtering only can take place in the upper reaction space A in order to capture possible flocculent reaction products.

It is noted once again that the filter material in the upper reaction space A can undergo a separate cycle by for instance making a connection to a second pump at the hat-shaped screen 27.

The contaminated washing water discharged via stub 11 can also be partially fed back again via pumping line 29 which debouches in reaction space B. Such contaminated washing water may contain a particular inoculant in the form of biomass which is suitable to again enable or accelerate a biochemical reaction in this reaction space.

The cleaning of the liquid according to the invention is based on the fact that in a continuous process the liquid for cleaning passes through different reaction spaces to form gaseous or flocculent reaction products which are captured or filtered out. The filter material can herein be continually changed, washed and re-used by one or more spaces.

## Claims

1. Method for treating a contaminated liquid in a reaction vessel (1) provided with at least two reaction spaces (A, B, C) situated one above the other, wherein said liquid to be treated is carried through the reaction vessel in upward flow from the bottom to the top, as well as through a filter bed of granular material arranged in at least the highest located space (A), wherein one or more reagents is added to said upward liquid flow at least in a reaction space under the filter bed of granular material, wherein the filter material is moved continuously downward through at least one reaction space counter to the liquid flow whereupon the filter material is fed back to the top of the vessel and subjected to a washing treatment, **characterized in that** a gaseous reaction product formed in a space is captured in this same space.

2. Method as claimed in claim 1, **characterized in that** a part of the washing liquid is fed back into a reaction space.

3. Apparatus for treating a liquid for the purpose of purifying thereof, comprising a reaction vessel provided with at least two reaction spaces (A, B, C) arranged one above the other, at least the upper (A) of which is provided with a filter bed of granular material, wherein the lower reaction space (C) is embodied with a feed means (7) for the liquid to be treated and the upper space with an outlet (12) for the cleaned liquid, and wherein a vertically standing hollow guide (3) of a pump, for transporting in upward direction the filter material, debouches in the lower part of a reaction space and leads to a washing device (9) for cleaning said filter granular material above said space, wherein also a feed member (20, 25) for a reagent is arranged in at least a reaction space (B, C) under the filter bed **characterized in that** a capturing means (21, 23, 27, 28) for a gaseous reaction product is arranged in the upper part of a reaction space (B,C).

4. Apparatus as claimed in claim 3, **characterized in that** the hollow guide (3) is a tube which extends through more than one reaction space (A, B, C) and on the upper end of which the washing device (9) is arranged.

5. Apparatus as claimed in claim 4, **characterized in that** the discharge pipe (11) of the washing device (9) has a branching (29) to a reaction space (B).

## Patentansprüche

1. Verfahren zum Behandeln einer verunreinigten Flüssigkeit in einem Reaktionsbehälter (1), der mit mindestens zwei Reaktionsräumen (A, B, C), die übereinander angeordnet sind, ausgestattet ist, wobei die zu behandelnde Flüssigkeit von unten nach oben in einer Aufwärtsströmung durch den Reaktionsbehälter sowie durch ein Filterbett eines partikulären Materials, welches wenigstens in einem am höchsten lokalisierten Raum (A) eingerichtet ist, geleitet wird, wobei ein oder mehrere Reagenz/Reagenzien zu der aufwärtsströmenden Flüssigkeit wenigstens in einem Reaktionsraum unterhalb des Filterbetts des partikulären Materials zugegeben wird/werden, wobei das Filtermaterial kontinuierlich nach unten durch wenigstens einen Reaktionsraum, dem Flüssigkeitsstrom entgegen, bewegt wird, wonach das Filtermaterial zum oberen Teil des Behälters zurückgeführt und einer Waschbehandlung unterworfen wird, **dadurch gekennzeichnet, dass** ein in einem Raum gebildetes, gasförmiges Reaktionsprodukt in dem selben Raum aufgefangen wird.

2. Verfahren wie im Anspruch 1 beansprucht, **dadurch gekennzeichnet, dass** ein Teil der Waschflüssigkeit in einen Reaktionsraum zurückgeführt wird.

3. Vorrichtung zum Behandeln einer Flüssigkeit für dessen Reinigung, mit einem Reaktionsbehälter, der mit wenigstens zwei, übereinander angeordneten Reaktionsräumen (A, B, C) ausgestattet ist, wobei wenigstens der obere (A) davon mit einem Filterbett eines partikulären. Materials ausgestattet ist, wobei der untere Reaktionsraum (C) mit einer Zufuhreinrichtung (7) für die zu behandelnde Flüssigkeit und der obere Raum mit einem Auslass (12) für die gereinigte Flüssigkeit ausgestaltet sind, und wobei eine vertikal stehende, hohle Führung (3) einer Pumpe zum Transportieren des Filtermaterials in Aufwärtsrichtung in das untere Teil eines Reaktionsraumes mündet und zu einer Waschvorrichtung (9) zum Reinigen des partikulären Filtermaterials oberhalb des Raums führt, wobei ebenso ein Zufuhrelement (20, 25) für ein Reagenz in wenigstens einem Reaktionsraum (B, C) unterhalb des Filterbetts angeordnet ist, **dadurch gekennzeichnet, dass** eine Auffangeinrichtung (21, 23, 27, 28) für ein gasförmiges Reaktionsprodukt im oberen Teil eines Reaktionsraums (B, C) angeordnet ist.

4. Vorrichtung wie im Anspruch 3 beansprucht, **dadurch gekennzeichnet, dass** die hohle Führung (3) ein Rohr ist, welches sich durch mehr als einen Reaktionsraum (A, B, C) erstreckt und an dessen oberen Ende die Waschvorrichtung (9) angeordnet ist.

5. Vorrichtung wie im Anspruch 4 beansprucht, **dadurch gekennzeichnet, dass** die Ausströmleitung (11) der Waschvorrichtung (9) eine Verzweigung (21) zu einem Reaktionsraum (B) besitzt.

## Revendications

1. Méthode pour traiter un liquide contaminé dans une enceinte de réaction (1) munie d'au moins deux espaces de réaction (A, B, C) situés l'un au- dessus de l'autre, dans laquelle le liquide à traiter est entraîné à travers l'enceinte de réaction en un flux ascendant depuis le fond jusqu'au sommet, ainsi qu'au travers d'un lit de filtrage d'un matériau granulaire disposé dans au moins l'espace (A) situé le plus haut, dans laquelle un réactif ou davantage est ajouté audit flux ascendant de liquide au moins dans un espace de réaction sous le lit de filtrage de matériau granulaire, dans laquelle le matériau de filtrage est déplacé en continu vers le bas à travers au moins un espace de réaction à l'encontre du flux de liquide, de sorte que le matériau de filtrage est renvoyé jusqu'au sommet de l'enceinte et soumis à un traitement de lavage, **caractérisée en ce qu'**un produit de réaction gazeux formé dans un espace est capturé dans ce même espace.

2. Méthode selon la revendication 1, **caractérisée en ce qu'**une partie du liquide de lavage est renvoyée dans un espace de réaction.

3. Appareil pour traiter un liquide dans le but de le purifier, comprenant une enceinte de réaction munie d'au moins deux espaces de réaction (A, B, C) disposés l'un au-dessus de l'autre , au moins l'espace supérieur (A) desquels étant pourvu d'un lit de filtrage de matériau granulaire, dans lequel l'espace de réaction inférieur (C) est réalisé avec un dispositif d'alimentation (7) pour le liquide à traiter et l'espace supérieur est muni d'une sortie (12) pour le liquide nettoyé , et dans lequel un guide creux (3) d'une pompe s'étendant verticalement , pour transporter le matériau filtre en direction du haut, débouche dans la partie inférieure d'un espace de réaction et conduit à un dispositif de lavage (9) pour nettoyer ledit matériau granulaire de filtrage au-dessus dudit espace, dans lequel également un organe d'alimentation (20, 25) pour un réactif est disposé dans au moins un espace de réaction (B, C) sous le lit de filtrage , **caractérisé en ce qu'**un dispositif (21, 23, 27, 28) de capture d'un produit de réaction gazeux est disposé dans la partie supérieure d'un espace de réaction (B, C).

4. Appareil selon la revendication 3, **caractérisé en ce que** le guide creux (3) est un tube qui s'étend à travers plus d'un espace de réaction (A, B, C) et sur l'extrémité supérieure duquel le dispositif de lavage (9) est agencé.

5. Appareil selon la revendication 4, **caractérisé en ce que** le tuyau de décharge (11) du dispositif de lavage (9) possède un branchement (29) vers un espace de réaction (B).
